# EUROPÄISCHE PATENTSCHRIFT

(11) **EP 2 619 466 B1**
(45) Veröffentlichungstag und Bekanntmachung des Hinweises auf die Patenterteilung: **17.08.2016**
(21) Anmeldenummer: 11748405.5
(22) Anmeldetag: 25.08.2011
(51) Int. Cl.: F16C 11/06, F16C 23/04, F16C 43/02

(54) **VERFAHREN ZUM HERSTELLEN EINES KUGELHÜLSENGELENKS**
METHOD FOR PRODUCING A SPHERICAL SLEEVE JOINT
PROCÉDÉ DE FABRICATION D'UN JOINT À DOUILLE À BILLE

(30) Priorität: 24.09.2010 DE 102010041306
(43) Veröffentlichungstag der Anmeldung: 31.07.2013
(73) Patentinhaber: ZF Friedrichshafen AG, 88046 Friedrichshafen (DE)
(72) Erfinder: RECHTIEN, Martin, 49434 Neuenkirchen (DE); GRUBE, Volker, 49356 Diepholz (DE)
(86) Internationale Anmeldenummer: PCT/EP2011/064589
(87) Internationale Veröffentlichungsnummer: WO 2012/038180

(56) Entgegenhaltungen:
- DE-A1- 3 731 586
- DE-A1-102004 056 575
- US-A- 3 629 921
- US-A- 5 477 614

## Beschreibung

Die Erfindung betrifft ein Verfahren zum Herstellen eines Kugelhülsengelenks mit einer einen balligen Lagerbereich aufweisenden und mit einer in einer axialen Richtung durchgehenden Montageöffnung versehenen Kugelhülse, die mittels des Lagerbereichs gleitbeweglich in einer Kugelschale gelagert und mit dieser in einer Außenhülse angeordnet wird, sodass sich die Kugelhülse in axialer Richtung beidseitig aus der Außenhülse heraus erstreckt. Ferner betrifft die Erfindung ein solches Kugelhülsengelenk.

Der Aufbau und die Montage von Hülsengelenken basieren auf dem Erstellen und Fügen von Einzelteilen (Kugelhülse, Kugelschale, Gehäuse, Dichtungsbalg usw.) in einzelnen Prozessen und Fertigungsschritten. Die Gesamtfunktion und Eigenschaft des Hülsengelenks wird durch die jeweilige Toleranzlage der Einzelteile bestimmt und durch nachfolgende Prozesse (Tempern, Schleifen etc.) optimiert, um Kundenforderungen einzuhalten.

Die DE 37 37 586 A1 offenbart ein gattungsbildendes Verfahren zur Herstellung eines Kugelhülsengelenks, wie auch ein entsprechendes Kugelhülsengelenk.

Die DE 10 2004 040 412 A1 offenbart ein Kugelhülsengelenk für Fahrwerksbaugruppen und Lenkungsbaugruppen von Kraftfahrzeugen, bestehend aus einem aus zwei Gehäusehälften bestehenden Gelenkgehäuse und einer mit einer gerundeten Lagerfläche versehenen Kugelhülse, wobei die Lagerfläche in einer aus elastischem Kunststoff gefertigten in einer Ausnehmung des Gelenkgehäuses festgelegten Lagerschale aufgenommen ist. Die beiden Gehäusehälften sind in Richtung der Mittellängsachse des Kugelhülsengelenkes mit definierten Presskräften während der Montage des Kugelhülsengelenkes zusammengepresst und in der durch die Presskräfte vorgegebenen Einbaulage mittels mindestens einer stoffschlüssigen Verbindung zwischen den Gehäusehälften gehalten.

Beim Einsetzen eines eingangs genannten Kugelhülsengelenks in eine Aufnahme wird in der Regel der Durchmesser der Außenhülse reduziert, sodass der von der Kugelschale auf den Lagerbereich ausgeübte Druck erhöht wird. Dies kann zu einer unerwünschten Erhöhung der Reibung zwischen der Kugelschale und dem Lagerbereich der Kugelhülse führen.

Die DE3137158 offenbart ein Gelenklager mit einem Außenkörper, der aus zwei ineinandergesteckten Blechtöpfen besteht, die durch Tiefziehen aus Blechronden hergestellt sind. Im Außenkörper ist ein sphärischer Innenkörper angeordnet und der Zwischenraum zwischen Außen- und Innenkörper ist von einer Kunststoffmasse ausgefüllt. Die Blechtöpfe müssen zur Bildung des Außenkörpers nach deren Herstellung gefügt werden. Es ist keine gesonderte axiale Sicherung der Kugel gegenüber dem Außenkörper vorhanden, so erhöhten Kräften zu einer Trennung von Kugel und Außenkörper führen könnten.

Ausgehend hiervon liegt der Erfindung die Aufgabe zugrunde, eine Erhöhung der Reibung zu vermeiden oder zumindest reduzieren zu können. Des Weiteren soll die Herstellung bzw. das Kugelhülsengelenk vereinfacht und verbessert werden.

Diese Aufgabe wird erfindungsgemäß mit einem Verfahren nach Anspruch 1 und 2 sowie mit einem Kugelhülsengelenk nach Anspruch 6 gelöst. Bevorzugte Weiterbildungen der Erfindung sind in den Unteransprüchen gegeben.

Bei dem erfindungsgemäßen Verfahren zum Herstellen eines Kugelhülsengelenks mit einer einen balligen Lagerbereich aufweisenden und mit einer in einer axialen Richtung durchgehenden Montageöffnung versehenen Kugelhülse, die mittels des Lagerbereichs gleitbeweglich in einer Kugelschale gelagert und mit dieser in einer Außenhülse angeordnet wird, sodass sich die Kugelhülse in axialer Richtung beidseitig aus der Außenhülse heraus erstreckt, wird in einen zwischen der Kugelschale und der Außenhülse umlaufenden Zwischenraum ein verfestigbares Material eingespritzt, durch dessen Verfestigung die aus der Kugelhülse und der Kugelschale gebildete Baugruppe mit der Außenhülse gefügt wird.

Das eingespritzte Material bildet nach seiner Verfestigung einen festen Körper, durch den die aus der Kugelhülse und der Kugelschale gebildete

Baugruppe in der Außenhülse befestigt ist. Allerdings schrumpft der durch das eingespritzte Material gebildete Körper während der Verfestigung des Materials, sodass sich in radialer Richtung ein Spalt zwischen dem Körper und der Außenhülse bildet. Dieser Spalt ist relativ gering und liegt z.B. in einer Größenordnung von einigen Hundertstel Millimetern. Dennoch bietet dieser Spalt Raum für eine Reduzierung des Durchmessers der Außenhülse, ohne dass dadurch der Druck zwischen der Kugelschale und dem Lagerbereich erhöht wird. Für den Fall, dass der Durchmesser der Außenhülse stärker als der durch den Spalt zur Verfügung gestellte Freiraum reduziert wird, wird zwar die Reibung zwischen der Kugelschale und dem Lagerbereich erhöht, jedoch in einem geringeren Umfang, als wenn von vornherein kein Spalt vorhanden gewesen wäre.

Vor dem Spritzen des Materials wird die aus der Kugelhülse und der Kugelschale gebildete Baugruppe vorzugsweise derart in der Außenhülse angeordnet, dass sich der zwischen der Kugelschale und der Außenhülse umlaufende Zwischenraum als Leerraum bildet. Dieser Leerraum wird dann durch den Spritzvorgang mit dem Material gefüllt. Der Zwischenraum ist insbesondere bezüglich einer Mittellängsachse des Kugelhülsengelenks umlaufend, die bevorzugt auch die Mittellängsachse der Außenhülse und/oder der Kugelhülse im unausgelenkten Zustand bildet und somit vorzugsweise in axialer Richtung verläuft.

Zur axialen Sicherung der aus der Kugelhülse und der Kugelschale gebildeten Baugruppe in der Außenhülse wird bevorzugt ein oder wenigstens ein axiales Ende der Außenhülse zumindest bereichsweise radial nach innen geformt oder gebogen. Das radial nach innen geformte oder gebogene Ende wird mit dem Material umspritzt. Vorzugsweise erstreckt sich das radial nach innen geformte oder gebogene Ende zumindest bereichsweise bis oder fast bis zur Kugelschale. Gemäß der Erfindung werden beide axiale Enden der Außenhülse zumindest bereichsweise radial nach innen geformt oder gebogen und mit dem Material umspritzt. Insbesondere erstrecken sich die radial nach innen geformten oder gebogenen Enden zumindest bereichsweise bis oder fast bis zur Kugelschale.

Das Verfahren zum Herstellen des Kugelhülsengelenks umfasst die folgenden Schritte, insbesondere in der angegebenen Reihenfolge:
- Ein axiales Ende der Außenhülse wird zumindest bereichsweise radial nach innen geformt oder gebogen.
- Die aus der Kugelhülse und der Kugelschale gebildete Baugruppe wird in der Außenhülse angeordnet, derart, dass sich die Kugelhülse in axialer Richtung beidseitig aus der Außenhülse heraus erstreckt.
- Das andere axiale Ende der Außenhülse wird zumindest bereichsweise radial nach innen geformt oder gebogen.
- Die axialen Enden der Außenhülse werden während des Einspritzens des Materials in den umlaufenden Zwischenraum von dem Material umspritzt. Gemäß einer Weiterbildung der Erfindung wird das Kugelhülsengelenk mit seiner Außenhülse unter Verringerung des Durchmessers der Außenhülse in eine Aufnahme eingebracht. Bevorzugt wird das Kugelhülsengelenk mit seiner Außenhülse unter Verringerung des Durchmessers der Außenhülse in eine Ausnehmung der Aufnahme eingebracht, vorzugsweise eingepresst oder eingedrückt. Insbesondere wird durch die Verringerung des Durchmessers der Außenhülse der Spalt geschlossen. Das Kugelhülsengelenk ist bevorzugt für den Einsatz in einem Kraftfahrzeug vorgesehen. Vorzugsweise ist die Aufnahme durch ein Fahrwerksbauteil, wie z.B. ein Lenker oder Radträger, gebildet, welches z.B. in der Radaufhängung eines Kraftfahrzeugs montiert wird. Die Ausnehmung der Aufnahme ist bevorzugt zylindrisch.

Gemäß einer Ausgestaltung der Erfindung werden beidseitig und axial außerhalb der Außenhülse Befestigungsansätze mit Ringnuten zum Befestigen von Dichtungsbälgen durch das Spritzen des Materials gebildet. Bevorzugt werden an den Ringnuten Dichtungsbälge befestigt, die sich jeweils bis zur Kugelhülse erstrecken.

Die Kugelschale kann an den Lagerbereich angespritzt werden. Bevorzugt wird die Kugelschale aber als separates Bauteil hergestellt und insbesondere auf den Lagerbereich aufgeschnappt.

Die Außenhülse und/oder die Kugelhülse bestehen bevorzugt jeweils aus Metall, insbesondere aus Stahl. Die Kugelschale besteht bevorzugt aus Kunststoff, insbesondere aus Polyoxymethylen (POM). Das verfestigbare Material besteht z.B. aus Kunststoff oder Metall. Insbesondere besteht das verfestigbare Material aus Zink, aus Aluminium, aus Magnesium oder aus faserverstärktem Polyamid, wie z.B. aus PA66 GF30.

Die Außenhülse ist bevorzugt hohlzylindrisch oder im Wesentlichen hohlzylindrisch ausgebildet. Der Lagerbereich weist eine vorzugsweise kugelförmige Lagerfläche auf, die an einer vorzugsweise hohlkugelförmigen Lagerfläche der Kugelschale anliegt. Die Kugelhülse umfasst zwei Endbereiche, wobei der Lagerbereich in axialer Richtung zwischen den Endbereichen angeordnet ist. Bevorzugt sind die Endbereiche hohlzylindrisch oder im Wesentlichen hohlzylindrisch ausgebildet.

Die Erfindung betrifft ferner ein Kugelhülsengelenk, insbesondere für ein Kraftfahrzeug, mit einer einen balligen Lagerbereich aufweisenden und mit einer in einer axialen Richtung durchgehenden Montageöffnung versehenen Kugelhülse, die mittels des Lagerbereichs gleitbeweglich in einer Kugelschale gelagert und mit dieser in einer Außenhülse angeordnet ist, sodass sich die Kugelhülse in axialer Richtung beidseitig aus der Außenhülse heraus erstreckt, wobei durch Einspritzen von verfestigbarem Material in einen zwischen der Kugelschale und der Außenhülse umlaufenden Zwischenraum ein fester Körper gebildet ist, durch den die aus der Kugelhülse und der Kugelschale gebildete Baugruppe in der Außenhülse befestigt ist. Das erfindungsgemäße Kugelhülsengelenk wird bevorzugt durch das erfindungsgemäße Verfahren hergestellt und kann gemäß allen in diesem Zusammenhang genannten Ausgestaltungen weitergebildet sein.

Der durch das eingespritzte Material gebildete Körper ist während der Verfestigung des Materials geschrumpft, sodass in radialer Richtung ein Spalt zwischen dem Körper und der Kugelschale gebildet ist. Dieser Spalt ist relativ gering und liegt z.B. in einer Größenordnung von einigen Hundertstel Millimetern.

Die Außenhülse ist bevorzugt unter Verringerung ihres Durchmessers in eine Aufnahme einbringbar oder eingebracht. Insbesondere ist die Außenhülse unter Verringerung ihres Durchmessers und unter Schließung des Spalts in eine Ausnehmung der Aufnahme einbringbar oder eingebracht, vorzugsweise durch Einpressen oder Eindrücken. Die Aufnahme ist vorzugsweise durch einen Lenker oder Radträger gebildet, der z.B. in der Radaufhängung eines Kraftfahrzeugs montiert oder montierbar ist.

Gemäß einer Ausgestaltung der Erfindung ist ein oder wenigstens ein axiales Ende der Außenhülse zumindest bereichsweise radial nach innen geformt oder gebogen und mit dem Material umspritzt, sodass die aus der Kugelhülse und der Kugelschale gebildete Baugruppe in der Außenhülse axial gesichert ist, insbesondere unter Zwischenschaltung des festen Körpers. Beide axialen Enden der Außenhülse sind zumindest bereichsweise radial nach innen geformt oder gebogen und mit dem Material umspritzt, sodass die aus der Kugelhülse und der Kugelschale gebildete Baugruppe in der Außenhülse beidseitig axial gesichert ist. Das oder die radial nach innen geformten oder gebogenen Enden erstrecken sich vorzugsweise jeweils zumindest bereichsweise bis oder fast bis zu der Kugelschale.

Gemäß einer Ausgestaltung der Erfindung umfasst der feste Körper beidseitig und axial außerhalb der Außenhülse angeordnete und beim Spritzen des Materials gebildete Befestigungsansätze mit Ringnuten, an denen Dichtungsbälge festlegbar oder festgelegt sind.

Vorzugsweise ist die Kugelschale als separates Bauteil gefertigt und insbesondere auf den Lagerbereich aufgeschnappt.

Das erfindungsgemäße Kugelhülsengelenk umfasst bevorzugt eine reduzierte Anzahl an Bauteilen. Insbesondere ist das erfindungsgemäße Kugelhülsengelenk mit einer reduzierten Anzahl von Montageprozessen herstellbar. Durch das Fügen der vormontierten Kugelhülse mit Kugelschale und Gehäuse mittels Einspritzprozess (Kunststoff, Zink, Al, etc.) wird das Hülsengelenk vorzugsweise als Gelenkkartusche komplettiert. Unter dem Begriff "Gehäuse" ist insbesondere die Außenhülse zu verstehen. Nachfolgend wird das Hülsengelenk durch die Montage des die Dichtungsbälge umfassenden Dichtsystems vervollständigt. Das Gehäuse wird insbesondere derart ausgeführt, dass
- der Außendurchmesser zum Einpressen in die Aufnahme (z.B. Lenker) nicht mehr nachgearbeitet werden muss und
- in axialer Richtung die Kugelschale abgestützt wird.

Die Ausbildung der Aufnahme des Dichtsystems erfolgt entweder durch das Gehäuse und/oder wird ganz oder teilweise durch das injizierte Material dargestellt, vorzugsweise in Form der Befestigungsansätze.

Insbesondere ergeben sich folgende Vorteile:
- Ein Tempern ist nicht erforderlich, da sich durch den Injektionsprozess der eingespritze Werkstoff (verfestigbares Material) den Ist-Maßen anpasst.
- Der Schrumpfprozess wird genutzt, um die Reibmoment-Schwankungen bei der Montage des Hülsengelenks, z.B. in einen Lenker, zu reduzieren (die Reibmoment-Schwankungen sind regelmäßig ein Nachteil bei eingespritzter Kugelschale für Standardkugelgelenke).
- Reduzierte Anzahl an Bauteilen.
- Reduzierte Anzahl an Montageprozessen.
- Gutes Lösemoment-zu-Reibmoment-Verhältnis durch Einsatz bekannter Systeme (POM-Kugelschale, Fett) und optimierter Vorspannung.
- Höhere Belastbarkeit in axialer Richtung im Vergleich zu einem Hülsengelenk im "Rohr-Design".

Die Erfindung wird nachfolgend anhand einer bevorzugten Ausführungsform unter Bezugnahme auf die Zeichnung beschrieben. In der Zeichnung zeigen:
- Fig. 1: eine teilweise geschnittene Darstellung eines erfindungsgemäßen Kugelhülsengelenks und
- Fig. 2: eine teilweise geschnittene Darstellung des Kugelhülsengelenks nach Fig. 1 in einem in einer Aufnahme eingepressten Zustand.

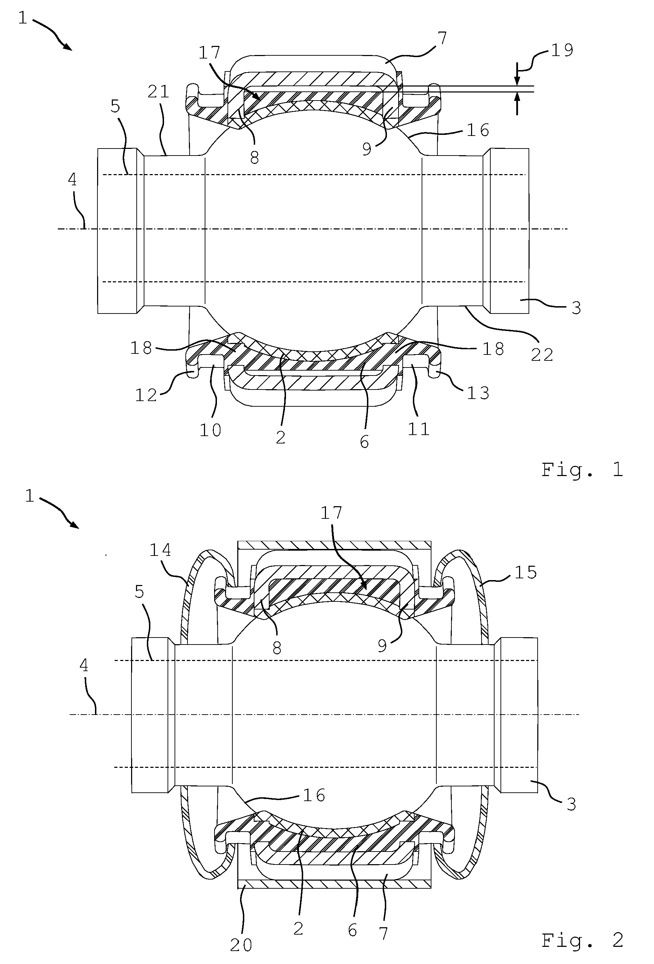

Aus Fig. 1 ist eine teilweise geschnittene Darstellung eines Kugelhülsengelenks 1 gemäß einer Ausführungsform der Erfindung ersichtlich, welches eine in einer Kugelschale 2 gleitbeweglich gelagerte Kugelhülse 3 umfasst, die in einer axialen Richtung 4 mit einer durchgehenden Montageöffnung 5 versehen ist. Die Kugelhülse 3 sitzt drehbar und schwenkbar in der Kugelschale 2, die mittels eines festen Körpers 6 in einer Außenhülse 7 festgelegt ist. Ferner sind die axialen Enden 8 und 9 der Außenhülse 7 radial nach innen gebogen und reichen bereichsweise bis oder fast bis an die Kugelschale 2 heran. Ferner greifen die axialen Enden 8 und 9 in den festen Körper 6 ein. Die axialen Enden 8 und 9 bilden somit eine axiale Sicherung für den Körper 6 und für die aus der Kugelhülse 3 und der Kugelschale 2 gebildete Baugruppe an der Außenhülse 7. Axial außerhalb der Außenhülse 7 umfasst der feste Körper 6 mit Ringnuten 10 und 11 versehene Befestigungsansätze 12 und 13, die zur Festlegung von Dichtungsbälgen 14 und 15 dienen, was schematisch in Fig. 2 gezeigt ist.

Die Kugelhülse 3 umfasst zwei Endbereiche 21 und 22 und einen balligen Lagerbereich 16, auf den die Kugelschale 2 aufgeschnappt ist und der zwischen den Endbereichen 21 und 22 angeordnet ist. Im montierten Zustand liegen die Dichtungsbälge 14 und 15 an den im Wesentlichen zylindrisch ausgebildeten und sich axial aus dem Körper 6 heraus erstreckenden Endebereichen 21 und 22 an.

Die Herstellung des Kugelgelenks 1 erfolgt folgendermaßen:
Die Kugelschale 2 wird auf den balligen Lagerbereich 16 der Kugelhülse 3 aufgeschnappt. Ferner wird das axiale Ende 8 der Außenhülse 7 radial nach innen gebogen. Nun wird die aus der Kugelhülse 3 und der Kugelschale 2 gebildete Baugruppe in der Außenhülse 7 derart angeordnet, dass zwischen der Kugelschale 2 und der Außenhülse 7 ein umlaufender, leerer Zwischenraum 17 eingeschlossen wird. Anschließend wird das axiale Ende 9 der Außenhülse 7 radial nach innen gebogen. Die Enden 8 und 9 reichen bis oder fast bis an die Kugelschale 2 heran. Vorzugsweise verbleibt zwischen der Kugelschale und den Enden 8 und 9 aber ein kleiner Spalt. In zumindest einem Bereich (hier zwei Bereiche) ist zwischen der Kugelschale 2 und den Enden 8, 9 eine Öffnung 18 vorgesehen, durch welche hindurch der Zwischenraum 17 von außen zugänglich ist. Durch die Öffnung(en) 18 wird in den Zwischenraum 17 ein Kunststoff eingespritzt, bei dem es sich bevorzugt um glasfaserverstärktes Polyamid, insbesondere um PA66 GF30 handelt. Ferner werden während des Spritzvorganges die Enden 8 und 9 unter Ausbildung der Befestigungsansätze 12 und 13 mit dem Kunststoff umspritzt. Nach der Verfestigung des Kunststoffes bildet dieser den festen Körper 6, der in radialer Richtung einen Spalt 19 zu der Außenhülse 7 aufweist. Dieser Spalt 19 bildet sich durch Schrumpfen des gespritzten Kunststoffes während der Verfestigung. Bevorzugt ist dieser Spalt 19 umlaufend.

Wie in Fig. 2 verdeutlicht, wird das Kugelhülsengelenk 1 nun mit seiner Außenhülse 7 in eine Aufnahme 20 eines Fahrwerklenkers eingepresst, sodass sich der Durchmesser der Außenhülse 7 verringert und der Spalt 19 geschlossen wird. Ferner werden, wie oben bereits angesprochen, die Dichtungsbälge 14 und 15 montiert, welche die Kugelhülse 3 gegenüber dem festen Körper 6 abdichten.

### Bezugszeichenliste

- 1: Kugelhülsengelenk
- 2: Kugelschale
- 3: Kugelhülse
- 4: axiale Richtung
- 5: durchgehende Öffnung durch Kugelhülse
- 6: fester Körper
- 7: Außenhülse
- 8: axiales Ende der Außenhülse
- 9: axiales Ende der Außenhülse
- 10: Ringnut
- 11: Ringnut
- 12: Befestigungsansatz
- 13: Befestigungsansatz
- 14: Dichtungsbalg
- 15: Dichtungsbalg
- 16: Lagerbereich der Kugelhülse
- 17: Zwischenraum
- 18: Öffnung
- 19: Spalt
- 20: Aufnahme
- 21: Endbereich der Kugelhülse
- 22: Endbereich der Kugelhülse

## Patentansprüche

1. Verfahren zum Herstellen eines Kugelhülsengelenks (1) mit einer einen balligen Lagerbereich (16) aufweisenden und mit einer in einer axialen Richtung (4) durchgehenden Montageöffnung (5) versehenen Kugelhülse (3), die mittels des Lagerbereichs (16) gleitbeweglich in einer Kugelschale (2) gelagert und mit dieser in einer Außenhülse (7) angeordnet wird, sodass sich die Kugelhülse (3) in axialer Richtung (4) beidseitig aus der Außenhülse (7) heraus erstreckt,
wobei in einen zwischen der Kugelschale (2) und der Außenhülse (7) umlaufenden Zwischenraum (17) ein verfestigbares Material eingespritzt wird, durch dessen Verfestigung die aus der Kugelhülse (3) und der Kugelschale (2) gebildete Baugruppe mit der Außenhülse (7) gefügt wird, **dadurch gekennzeichnet, dass**
zur axialen Sicherung der aus der Kugelhülse (3) und der Kugelschale (2) gebildeten Baugruppe in der Außenhülse (7) wenigstens ein axiales Ende (8) der Außenhülse (7) zumindest bereichsweise radial nach innen geformt und mit dem Material umspritzt wird.

2. Verfahren zum Herstellen eines Kugelhülsengelenks (1) mit einer einen balligen Lagerbereich (16) aufweisenden und mit einer in einer axialen Richtung (4) durchgehenden Montageöffnung (5) versehenen Kugelhülse (3), die mittels des Lagerbereichs (16) gleitbeweglich in einer Kugelschale (2) gelagert wird, wobei die folgenden Schritte insbesondere in der angegebenen Reihenfolge durchgeführt werden:
- ein axiales Ende (8) einer Außenhülse (7) wird zumindest bereichsweise radial nach innen geformt oder gebogen,
- die aus der Kugelhülse (3) und der Kugelschale (2) gebildete Baugruppe wird in einer Außenhülse (7) angeordnet, sodass sich
die Kugelhülse (3) in axialer Richtung (4) beidseitig aus der Außenhülse (7) heraus erstreckt,
- das andere axiale Ende (9) der Außenhülse (7) wird zumindest bereichsweise radial nach innen geformt oder gebogen,
- in einen zwischen der Kugelschale (2) und der Außenhülse (7) umlaufenden Zwischenraum (17) wird ein verfestigbares Material eingespritzt wird, durch dessen Verfestigung die aus der Kugelhülse (3) und der Kugelschale (2) gebildete Baugruppe mit der Außenhülse (7) gefügt wird, wobei die axialen Enden (8, 9) der Außenhülse (7) während des Einspritzens des Materials in den Zwischenraum (17) von dem Material umspritzt werden.

3. Verfahren nach Anspruch 1 oder 2,
**dadurch gekennzeichnet, dass**
das Kugelhülsengelenk (1) mit seiner Außenhülse (7) unter Verringerung des Durchmessers der Außenhülse (7) in eine Aufnahme (20) eingebracht wird.

4. Verfahren nach einem der vorangehenden Ansprüche,
**dadurch gekennzeichnet, dass**
beidseitig und axial außerhalb der Außenhülse (7) Befestigungsansätze (12, 13) mit Ringnuten (10, 11) zum Befestigen von Dichtungsbälgen (14, 15) durch das Spritzen des Materials gebildet werden.

5. Verfahren nach einem der vorangehenden Ansprüche,
**dadurch gekennzeichnet, dass**
die Kugelschale (2) auf den Lagerbereich (16) aufgeschnappt wird.

6. Kugelhülsengelenk mit einer einen balligen Lagerbereich (16) aufweisenden und mit einer in einer axialen Richtung (4) durchgehenden Montageöffnung (5) versehenen Kugelhülse (3), die mittels des Lagerbereichs (16) gleitbeweglich in einer Kugelschale (2) gelagert und mit dieser in einer Außenhülse (7) angeordnet ist, sodass sich die Kugelhülse (3) in axialer Richtung (4) beidseitig aus der Außenhülse (7) heraus erstreckt,
wobei durch Einspritzen von verfestigbarem Material in einen zwischen der Kugelschale (2) und der Außenhülse (7) umlaufenden Zwischenraum (17) ein fester Körper (6) gebildet ist, durch den die aus der Kugelhülse (3) und der Kugelschale (2) gebildete Baugruppe in der Außenhülse (7) befestigt ist,
**dadurch gekennzeichnet, dass**
wenigstens ein axiales Ende (8) der Außenhülse (7) zumindest bereichsweise radial nach innen geformt und mit dem Material umspritzt ist, sodass die aus der Kugelhülse (3) und der Kugelschale (2) gebildete Baugruppe in der Außenhülse (7) axial gesichert ist.

7. Kugelhülsengelenk nach Anspruch 6,
**dadurch gekennzeichnet, dass**
die Außenhülse (7) unter Verringerung ihres Durchmessers in eine Aufnahme (20) eingebracht ist.

8. Kugelhülsengelenk nach Anspruch 6 oder 7,
**dadurch gekennzeichnet, dass**
wenigstens ein axiales Ende (8) der Außenhülse (7) zumindest bereichsweise radial nach innen geformt und mit dem Material umspritzt ist, sodass die aus der Kugelhülse (3) und der Kugelschale (2) gebildete Baugruppe in der Außenhülse (7) axial gesichert ist.

9. Kugelhülsengelenk nach einem der Ansprüche 6 bis 8,
**dadurch gekennzeichnet, dass**
der feste Körper (6) beidseitig und axial außerhalb der Außenhülse (7) angeordnete und beim Spritzen des Materials gebildete Befestigungsansätze (12, 13) mit Ringnuten (10, 11) umfasst, an denen Dichtungsbälge (14, 15) festlegbar sind.

10. Kugelhülsengelenk nach einem der Ansprüche 6 bis 9,
**dadurch gekennzeichnet, dass**
die Kugelschale (2) auf den Lagerbereich (16) aufgeschnappt ist.

## Claims

1. Method for producing a ball sleeve joint (1) having a ball sleeve (3) which has a spherical bearing region (16), is provided with an assembly opening (5) which is continuous in an axial direction (4), is slidably mounted by means of the bearing region (16) in a ball shell (2) and is arranged with the said ball shell (2) in an outer sleeve (7), with the result that the ball sleeve (3) extends out of the outer sleeve (7) in the axial direction (4) on both sides, a material which can solidify being injected into an intermediate space (17) which runs around between the ball shell (2) and the outer sleeve (7), by way of the solidification of which material the assembly which is formed from the ball sleeve (3) and the ball shell (2) is joined to the outer sleeve (7), **characterized in that** at least one axial end (8) of the outer sleeve (7) is formed radially to the inside at least in regions and is encapsulated by the material for axially securing the assembly which is formed from the ball sleeve (3) and the ball shell (2) in the outer sleeve (7).

2. Method for producing a ball sleeve joint (1) having a ball sleeve (3) which has a spherical bearing region (16), is provided with an assembly opening (5) which is continuous in an axial direction (4), and is mounted slidably in a ball shell (2) by means of the bearing region (16), the following steps being carried out, in particular in the specified sequence:
- an axial end (8) of an outer sleeve (7) is formed or bent radially to the inside at least in regions,
- the assembly which is formed from the ball sleeve (3) and the ball shell (2) is arranged in an outer sleeve (7), with the result that
the ball sleeve (3) extends out of the outer sleeve (7) on both sides in the axial direction (4),
- the other axial end (9) of the outer sleeve (7) is formed or bent radially to the inside at least in regions,
- a material which can solidify is injected into an intermediate space (17) which runs around between the ball shell (2) and the outer sleeve (7), by way of the solidification of which material the assembly which is formed from the ball sleeve (3) and the ball shell (2) is joined to the outer sleeve (7), the axial ends (8, 9) of the outer sleeve (7) being encapsulated by the material during the injection of the material into the intermediate space (17).

3. Method according to Claim 1 or 2, **characterized in that** the ball sleeve joint (1) is introduced with its outer sleeve (7) into a receptacle (20) with a reduction in the diameter of the outer sleeve (7).

4. Method according to one of the preceding claims, **characterized in that** the fastening extensions (12, 13) with annular grooves (10, 11) for fastening sealing boots (14, 15) are formed on both sides and axially outside the outer sleeve (7) by way of the injection of the material.

5. Method according to one of the preceding claims, **characterized in that** the ball shell (2) is snapped onto the bearing region (16).

6. Ball sleeve joint having a ball sleeve (3) which has a spherical bearing region (16), is provided with an assembly opening (5) which is continuous in an axial direction (4), is mounted slidably in a ball shell (2) by means of the bearing region (16), and is arranged with the said ball shell (2) in an outer sleeve (7), with the result that the ball sleeve (3) extends out of the outer sleeve (7) on both sides in the axial direction (4), a solid body (6) being formed by way of the injection of material which can solidify into an intermediate space (17) which runs around between the ball shell (2) and the outer sleeve (7), by way of which solid body (6) the assembly which is formed from the ball sleeve (3) and the ball shell (2) is fastened in the outer sleeve (7), **characterized in that** at least one axial end (8) of the outer sleeve (7) is formed radially to the inside at least in regions and is encapsulated with the material, with the result that the assembly which is formed from the ball sleeve (3) and the ball shell (2) is secured axially in the outer sleeve (7).

7. Ball sleeve joint according to Claim 6, **characterized in that** the outer sleeve (7) is introduced into a receptacle (20) with a reduction in the diameter of the said outer sleeve (7).

8. Ball sleeve joint according to Claim 6 or 7, **characterized in that** at least one axial end (8) of the outer sleeve (7) is formed radially to the inside at least in regions and is encapsulated with the material, with the result that the assembly which is formed from the ball sleeve (3) and the ball shell (2) is secured axially in the outer sleeve (7).

9. Ball sleeve joint according to one of Claims 6 to 8, **characterized in that** the solid body (6) comprises fastening extensions (12, 13) which are arranged on both sides and axially outside the outer sleeve (7), are formed during the injection of the material, and have annular grooves (10, 11), on which sealing boots (14, 15) can be fixed.

10. Ball sleeve joint according to one of Claims 6 to 9, **characterized in that** the ball shell (2) is snapped onto the bearing region (16).

## Revendications

1. Procédé de fabrication d'un joint à douille à bille (1) comprenant une douille à bille (3) présentant une région de support bombée (16) et pourvue d'une ouverture de montage (5) s'étendant dans une direction axiale (4), qui est supportée de manière glissante dans une coque sphérique (2) au moyen de la région de support (16) et qui est disposée avec celle-ci dans une douille extérieure (7), de sorte que la douille à bille (3) s'étende dans la direction axiale (4) des deux côtés hors de la douille extérieure (7),
un matériau pouvant être solidifié étant injecté dans un espace intermédiaire périphérique (17) entre la coque sphérique (2) et la douille extérieure (7), dont la solidification provoque l'assemblage du module formé de la douille à bille (3) et de la coque sphérique (2) avec la douille extérieure (7),
**caractérisé en ce que**
pour la fixation axiale du module formé de la douille à bille (3) et de la coque sphérique (2) dans la douille extérieure (7), au moins une extrémité axiale (8) de la douille extérieure (7) est formée au moins en partie radialement vers l'intérieur et est surmoulée avec le matériau.

2. Procédé de fabrication d'un joint à douille à bille (1) comprenant une douille à bille (3) présentant une région de support bombée (16) et pourvue d'une ouverture de montage (5) s'étendant dans une direction axiale (4), qui est supportée de manière glissante dans une coque sphérique (2) au moyen de la région de support (16), les étapes suivantes étant effectuées, notamment dans l'ordre indique :
- une extrémité axiale (8) d'une douille extérieure (7) est formée ou cintrée au moins en partie radialement vers l'intérieur,
- le module formé de la douille à bille (3) et de la coque sphérique (2) est disposé dans une douille extérieure (7), de telle sorte que la douille à bille (3) s'étende des deux côtés hors de la douille extérieure (7) dans la direction axiale (4),
- l'autre extrémité axiale (9) de la douille extérieure (7) est formée ou cintrée au moins en partie radialement vers l'intérieur,
- un matériau pouvant être solidifié est injecté dans un espace intermédiaire périphérique (17) entre la coque sphérique (2) et la douille extérieure (7), dont la solidification provoque l'assemblage du module formé de la douille à bille (3) et de la coque sphérique (2) avec la douille extérieure (7), les extrémités axiales (8, 9) de la douille extérieure (7) étant surmoulées par le matériau pendant l'injection du matériau dans l'espace intermédiaire (17).

3. Procédé selon la revendication 1 ou 2,
**caractérisé en ce que**
le joint à douille à bille (1) est introduit dans un logement (20) avec sa douille extérieure (7) par réduction du diamètre de la douille extérieure (7).

4. Procédé selon l'une quelconque des revendications précédentes,
**caractérisé en ce que**
des deux côtés, et axialement à l'extérieur de la douille extérieure (7), des inserts de fixation (12, 13) avec des rainures annulaires (10, 11) sont formés par moulage par injection du matériau pour la fixation de soufflets d'étanchéité (14, 15).

5. Procédé selon l'une quelconque des revendications précédentes,
**caractérisé en ce que**
la coque sphérique (2) est encliquetée sur la région de support (16).

6. Joint à douille à bille comprenant une douille à bille (3) présentant une région de support bombée (16) et pourvue d'une ouverture de montage (5) s'étendant dans une direction axiale (4), qui est supportée de manière glissante dans une coque sphérique (2) au moyen de la région de support (16) et qui est disposée avec celle-ci dans une douille extérieure (7), de sorte que la douille à bille (3) s'étende dans la direction axiale (4) des deux côtés hors de la douille extérieure (7), un matériau pouvant être solidifié étant injecté dans un espace intermédiaire périphérique (17) entre la coque sphérique (2) et la douille extérieure (7) et formant ainsi un corps solide (6) dont la solidification provoque l'assemblage du module formé de la douille à bille (3) et de la coque sphérique (2) avec la douille extérieure (7),
**caractérisé en ce**
**qu'**au moins une extrémité axiale (8) de la douille extérieure (7) est formée au moins en partie radialement vers l'intérieur et est surmoulée avec le matériau, de telle sorte que le module formé par la douille à bille (3) et la coque sphérique (2) soit fixé axialement dans la douille extérieure (7).

7. Joint à douille à bille selon la revendication 6,
**caractérisé en ce que**
la douille extérieure (7) est introduite dans un logement (20) par réduction de son diamètre.

8. Joint à douille à bille selon la revendication 6 ou 7,
**caractérisé en ce**
**qu'**au moins une extrémité axiale (8) de la douille extérieure (7) est formée au moins en partie radialement vers l'intérieur et est surmoulée avec le matériau, de telle sorte que le module formé par la douille à bille (3) et la coque sphérique (2) soit fixé axialement dans la douille extérieure (7).

9. Joint à douille à bille selon l'une quelconque des revendications 6 à 8,
**caractérisé en ce que**
le corps solide (6) comprend, des deux côtés et axialement à l'extérieur de la douille extérieure (7), des inserts de fixation (12, 13) avec des rainures annulaires (10, 11) formés par moulage par injection du matériau, au niveau desquels peuvent être fixés des soufflets d'étanchéité (14, 15).

10. Joint à douille à bille selon l'une quelconque des revendications 6 à 9,
**caractérisé en ce que**
la coque sphérique (2) est encliquetée sur la région de support (16).
